# EUROPEAN PATENT APPLICATION

(11) **EP 3 866 569 A1**
(43) Date of publication of application: **18.08.2021**
(21) Application number: 20157413.4
(22) Date of filing: 14.02.2020
(51) Int. Cl.: H05B 45/30, H02M 3/158

(54) **REGENERATIVE INVERTER DRIVE FOR ELECTROLUMINESCENT DEVICES**

(71) Applicant: Bandgap Ltd., Windsor SL4 3HU (GB); JENOPTIK Advanced Systems GmbH, 22880 Wedel (DE)
(72) Inventor: Sebire, Samuel, Guernsey, GY7 9RX (GB)
(74) Representative: Waldauf, Alexander

(57) **Abstract**

An inverter drive (2) for an electroluminescent device (1) connectable to dc rails in which the drive comprises first and second switches (SW1 and SW2) in a half-bridge arrangement, which alternately connect the electroluminescent device to one or rail or the other. Inductors (L2 and if populated L1 and L3) are provided between the rails and the electroluminescent device preventing high in-rush currents. A regenerative bridge arrangement connects the electroluminescent device to ground through further switches (SW3 and SW4) and storage inductors (L2 and L4) to discharge the electroluminescent device when fully charged, but store its energy in the magnetic field of the storage inductors (L2 & L4) for regeneration on recharging.

This novel regenerative inverter drive has significant benefits over existing architectures when used to power capacitive loads such as electroluminescent devices. These include low component count, very high efficiency, variable voltage (determined by the dc rails the inverter drive is connected to), variable frequency and compensation for different load capacitances also by adjusting waveform timings.

## Description

### Technical Field

This invention relates to an electronic regenerative inverter drive for electroluminescent devices and other capacitive loads.

### Background Art

Existing electroluminescent (EL) inverter technology on the market for powering EL wire, tape, panels and coatings typically use a few basic circuit topologies with little variation. Different sized components are used for different EL areas/metres of EL wire and variations may include different transformer turns ratios and input voltages and extra features such as pulsing or flashing. Due to the passive nature of many of the single transistor oscillator type inverters (and lack of feedback), the output voltage and frequency will be determined by how much load is put on the inverter. A mismatched inverter/EL load combination will result in an undesirable voltage and or frequency. This can make both the inverter and EL panel inefficient. Small and large loads, out of the recommended operating range, can both overheat the inverter causing permanent damage.

Many existing electroluminescent inverter drives employ transformers with very high turn ratios. With thousands of turns of fine copper wire, the secondary windings will have a high resistance. This resistance causes a significant proportion of the energy entering the transformer to be dissipated as heat.

Electroluminescent devices and other similarly capacitive loads can lead to excessive heating of and audible noise from the load and drive electronics using standard drive techniques. There are many problems with simply driving an electroluminescent device with either a H-bridge or Half-Bridge of the kind suitable for other types of load. They include:
- Very high inrush currents when the load capacitance is connected to the supply rails. When a capacitor is charged from a fixed voltage the maximum overall charging efficiency is 50% due to these high initial currents where the majority of the energy is dissipated as heat in the conductors and switches, as opposed to being stored in the capacitor.
- If the load capacitance is already charged to the same potential as the other supply rail (the same voltage but with the opposite polarity) the peak currents are double and the energy which was stored in the capacitance is dissipated in the inverter circuitry, none of it being recovered.
- High peak currents at audible frequencies (typically 100Hz to 4000Hz for thick-film EL) make it more likely that audible noise will be produced by inductors and capacitors in the circuit. The high peak currents will also cause Equivalent Series Resistance (ESR) heating in the capacitors and with aluminium electrolytic capacitors, an increase of 10 degrees C typically halves their lifespan.
- Large ripple currents will also result in large ripple voltage if the voltage generator cannot maintain a constant voltage. The resulting AC waveform will also be distorted and may result in extra audible noise.
- As none of the energy stored in the capacitance will be recovered with these methods, the efficiency of the circuit will be very low and these losses will be proportional to frequency.

An additional issue that arises with existing electroluminescent devices, many of which are formed of a thin layer of electroluminescent material on a silver backing foil is that at low frequencies, ionic migration leads to silver from the backing foil migrates into the electroluminescent layer displacing copper ions in the electroluminescent material and causing degradation in the performance of the electroluminescent device.

More modern EL inverter architectures based around Pulse-Width-Modulation (PWM), similar to those designed to output sinusoidal 50/60Hz mains AC also have their issues when being used with capacitive loads. They include:
- No significant improvement in power density. Commercially available PWM-based EL inverters are of a similar size to transformer-based inverters with a similar power output. This is evidenced by the fact that programmable AC power supplies, whilst highly sophisticated, still are very large, heavy and expensive for a relatively small output VA rating. EL typically only has a power factor of 0.2, so an expensive 500VA programmable power supply will only power a 100W EL Load.
- Expensive due to large, high-quality components and high component count required.
- Large switching losses due to high frequency PWM on the output transistors, as the PWM frequency must be significantly higher than the already fairly high fundamental frequency required by the EL device. Whilst it is fairly easy to produce PWM-based inverters for loads with a high power factor, at 50/60Hz output frequency, it is much more difficult to do so for low power factor EL loads at 1000-2000Hz output frequency.
- Difficult to design, high component count, expensive and often inefficient output filtering is required to filter out the PWM frequency to give a clean output with low EMI.

### Summary of invention

According to the present invention a regenerative inverter drive for electroluminescent devices or other capacitive loads comprises a first supply rail Vp and a second supply rail Vn respectively, being maintained at different voltages with respect to each other and to ground, the ground voltage being between the voltage of the first and second supply rails, wherein in that the drive comprises first and second switches to connect to and alternately charge and discharge the capacitive load and importantly the drive additionally includes one or more energy storage devices absorbing and storing energy from the capacitive load until the capacitive load has discharged to the ground voltage, when the energy can then be transferred back to the capacitive load by regenerative action recharging the capacitive load with the reverse polarity.

Depending on the specification of the electroluminescent device or other capacitive load, the first and second rails can be maintained with a voltage difference of 600volts for large devices to as low as 20 volts for thin layer devices.

Conventionally the ground voltage has been set as the mean of the voltages on the first and second rails, however, the inventor has found that by maintaining a small voltage bias on the ground voltage, up to about 5 volts above the mean voltage of the first and second rails, ionic migration of ions from any mounting sheet on which the electroluminescent material of the device is mounted is substantially reduced or eliminated.

The drive may also be connected to a single voltage rail and ground, with a mid-voltage rail used in place of ground. A capacitor divider can be used to split the voltage to produce this mid voltage rail.

Ideally, the first and second switches are solid-state switches alternately supplied with a square wave form to open and close the switches, one switch being open when the other is closed.

In a preferred embodiment the drive additionally comprises third and fourth solid-state switches and a storage inductor between the third and fourth switches and the electroluminescent device or capacitive load, either of the third or fourth switches, when closed, connects the electroluminescent device or capacitive load to ground, each of the third and fourth switches having a rectifier between the switch and the storage inductor, one rectifier oriented to allow flow of current between the electroluminescent device and ground when the electroluminescent device is positively charged via the fourth switch when closed and the other rectifier oriented to allow flow of current between ground the electroluminescent device when the electroluminescent device is negatively charged via the third switch is closed.

In the preferred embodiment, the fourth switch is normally closed and the other switches open and when the electroluminescent device is fully positively charged.

In the preferred embodiment the third switch is closed and the other switches open when the electroluminescent device is fully negatively charged.

In one arrangement of the preferred embodiment the third and fourth switches open from being closed when the current in the storage inductor is near zero. In one implementation the first switch closes when the third switch opens and the second switch closes when the third switch closes.

Other features of the invention will be apparent form the following exemplary description of one implementation of the invention.

### Brief description of drawings

Figure 1 is an exemplary drive according to the invention for driving a capacitive load, in this example an electroluminescent device;
Figure 2 shows the voltage pattern supplied to each of V1, V2, V3 and V4 of Figure 1, the output voltage waveform measured at Vo of Figure 1, and the output current measured at lo of Figure 1;
Figure 3 is an alternative exemplary drive based around a H-bridge instead of a half-bridge as is the case for Figure 1., by inclusion of two additional solid-state switches SW5, SW6, rectifiers RECT5 and RECT6.

### Description of examples

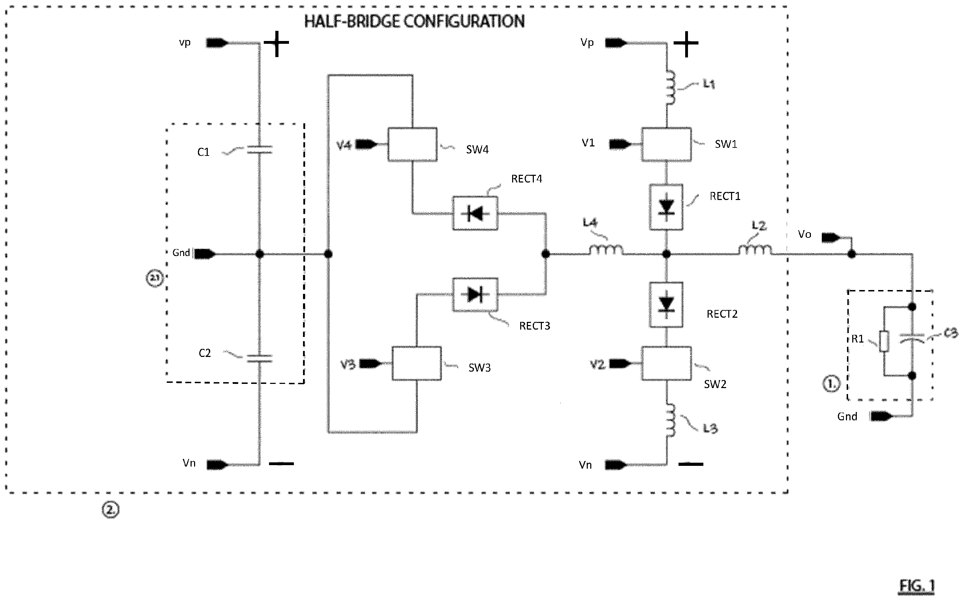

In Figure 1 an electroluminescent display 1, represented by a capacitive load element C3 and parallel resistor R1 is connected though inductor L2 between a first dc rail Vp and second dc rail Vn and is driven by an inverter drive circuit 2. The first rail is maintained at a voltage of V above that of the second rail. In this example the first rail is at +V/2 volts and the negative rail at -V/2 volts, but the first rail could equally well be maintained at 0 volts and the second rail at -V volts, or the first rail at V volts and the second rail at 0 volts for example. The actual voltages chosen would depend on the required driving voltage V of the electroluminescent device 1.

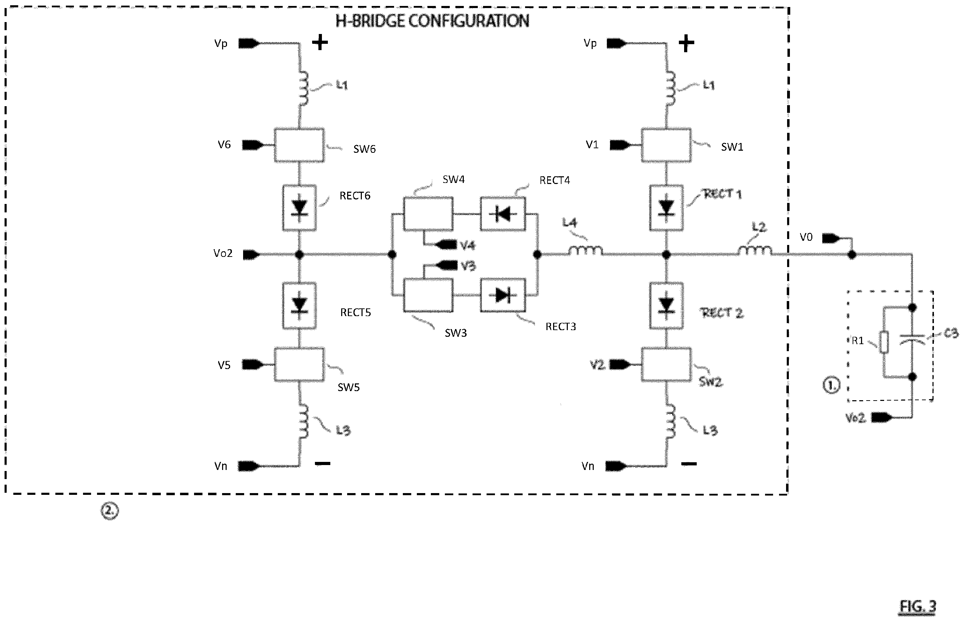

The dc rails Vp and Vn which are switched alternately to connect to one side of the electroluminescent device 1 by solid-state switches SW1 and SW2 through inductor L2. If either inductor L2 or inductor L4 is omitted, it is important that the other is present for regenerative energy storage. L2 serves to both act as a regenerative energy storage device and to limit the inrush current when SW1 or SW2 are closed. L4 only acts as a regenerative energy storage device. In the example in Figure 1, L1 and L3 are included to further limit inrush current. The other side of the electroluminescent device is connected to ground. Ground is at a voltage midway between the voltage applied to the first rail and the voltage of the second rail, with a small bias of typically up to positive or negative 5volts to avoid or minimise ionic migration in the device coming from the silver backplane layer. Note: L1 and L3 are each shown in two locations in Figure 1 and Figure 3 for neatness of the Figures only and do not represent duplicated devices in physical implementation.

The regenerative inverter drive 2 of this invention is a modified version of the conventional half-bridge drive and comprises a half-bridge drive (switches SW1 and SW2) with the inductors L2 and L4, the switches SW3 and SW4 and the rectifiers RECT3 and RECT4.

The half-bridge comprises connections to the first and second dc rails Vp and Vn.

In this example, the solid-state switches SW1, SW2, SW3 and SW4 described may be any type of solid-state switches. Commonly these will be MOSFETs, BJTs or IGBTs.

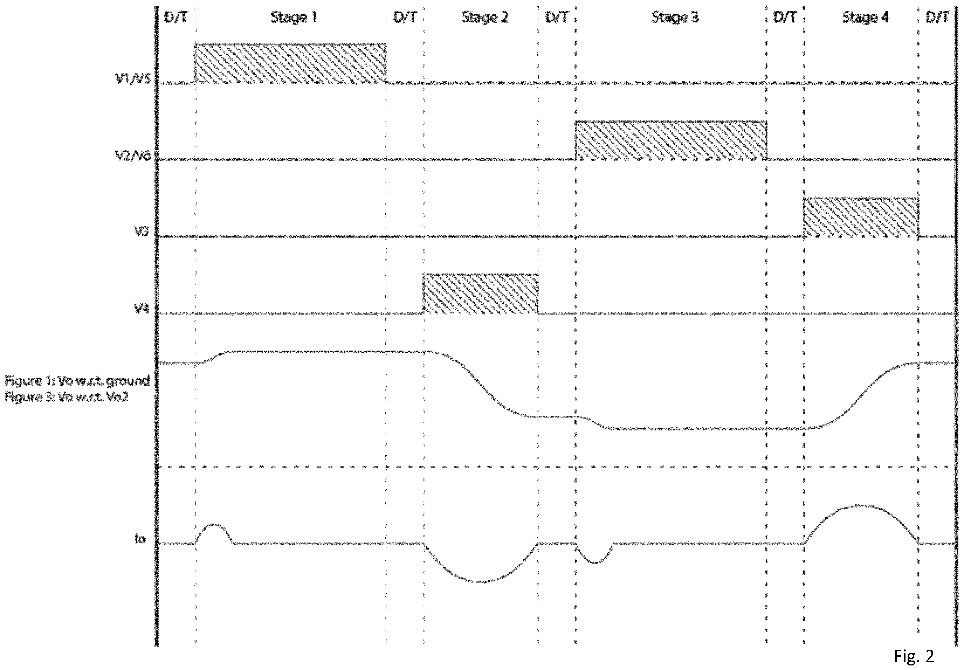

The first dc rail Vp has a connection to one side of solid-state switch SW1. The other end of solid-state switch SW1 is connected to the trailing side of rectifier RECT1, so that reverse currents on discharge of capacitive load C3 are prevented. RECT1 is connected the end of the inductor L2 opposite to the electroluminescent panel 1 and to the end of L4 furthest from the switches SW3 and SW4. A voltage supply pattern V1 as discussed below with reference to figure 2 is connected to the controlling input to switch SW1; this switches the supply Vp to the electroluminescent display on or off according to the voltage pattern V1. When the first rail Vp is switched through the solid-state switch SW1, the capacitor element C3 of the electroluminescent device charges positively and the electroluminescent device emits light.

The connection to the second dc rail Vn is similar to that described in the previous paragraph but adapted current flowing to the second rail and comprises a solid-state switch SW2 which has one connection to Vn. The other end of solid-state switch SW2 is connected to the forward side of rectifier RECT 2, so that currents flowing on charging of capacitive load C3 are prevented from flowing away from solid-state switch SW2. The trailing side of RECT2 is connected to the end of the inductor L2 that is opposite to the end connected to the electroluminescent panel 1. A voltage supply pattern V2 as discussed below with reference to figure 2 is connected to the controlling input to switch SW2; this switches the charged capacitor element C3 of the electroluminescent display 1 to discharge to the second dc rail Vn. Switching of solid-state switch SW2 is controlled by the voltage supply pattern V2. When the capacitor element C3 of the electroluminescent device 1 discharges, the electroluminescent device emits light.

In addition to storage inductors L2 and L4, the inverter drive 2 requires the solid-state switches SW3 and SW4. Direction of current flow through SW3 and SW4 is assured by rectifiers RECT3 and RECT4, as many real-world solid-state switches such as MOSFETs only have the ability to be open circuit to current flowing in one direction, due to intrinsic parasitic body diodes. Instead of rectifiers such as diodes, synchronous rectification devices can be used for RECT3 and RECT4. If solid-state switches having the ability to block current from either direction when open are used, RECT3 and RECT4 can be eliminated entirely.

The solid-state switch SW3 has one connection to ground. The other end of solid-state switch SW3 is connected to the trailing side of rectifier RECT3. RECT3 is connected though storage inductor L4 to the end of storage and power rail inrush limiting inductor L2 that is opposite to the electroluminescent panel 1. Operation of the solid-state switch SW3 is controlled by the voltage pattern V3 as discussed below with reference to figure 2.

The solid-state switch SW4 has one connection to ground. The other end of solid-state switch SW4 is connected to the forward side of rectifier RECT4. RECT4 is connected though storage inductor L4 to the end of storage and power rail inrush limiting inductor L2 that is opposite to the electroluminescent panel 1. Operation of the solid-state switch SW4 is controlled by the voltage pattern V4 as discussed below with reference to figure 2.

Operation of the inverter drive circuit 2 follows a sequence of four stages, and the stages are then repeated. There is a small dead-time between them to ensure that relevant solid-state switches SW1 to SW4 have fully opened to prevent shoot-through otherwise known as cross conduction. This is when two series switches between different voltage rails are allowed to pass current presenting a low impedance to the voltage rails resulting in high and potentially damaging current flow. The sequence is as follows:

Stage 1: Switch SW1 closes, connecting the electroluminescent device to rail Vp though inrush limiting inductor L1, rectifier RECT1 and inductor L2 The inductors L2 and L1 (if included) allow the capacitive element C3 of the electroluminescent device 1 to be efficiently charged, by reducing the inrush currents. After some time, the electroluminescent device 1 is charged to the same potential as the positive supply rail Vp, switch SW1 then opens.

Stage 2: Switch SW4 then closes, connecting the electroluminescent device 1 to ground through storage inductors L2 and L4. As the capacitive element C3 of the electroluminescent device 1 is discharged, the current in the storage inductors L2 and L4 build sinusoidally (an oscillatory LC action). When all the charge (energy) in the capacitive element C3 has been removed, the current in the storage inductors L2 and L4 are at maximum. See lo of figure 2), hence the energy stored in the magnetic field built by the storage inductors L2 and L4 are also at their maximum. Using ideal lossless components in the inverter drive 2, without resistive element R1 of electroluminescent device 1, theoretically the energy stored in the storage inductors L2 and L4 would equal what had been stored in the capacitive element C3 of the electroluminescent device 1. As the current in the storage inductors L2 and L4 then begins to fall, the capacitive element C3 keeps "discharging" and the voltage is pulled negative. With ideal components at the point of maximum negative current through L2 and L4, the capacitive element C3 of the electroluminescent panel 1 would be charged to the same potential as the negative supply rail, assuming the ground point is mid-way between the first and second supply rail (Vp and Vn) potentials. In reality, the voltage will not reach this negative potential due to energy losses, including the emission of light (when the load is an electroluminescent device). A current sense circuit (not shown) monitors the current in either or both the storage inductors L2 and L4 and opens Switch SW4 to end Stage 2 as soon current in the storage inductors L2 and L4 has fallen to close to zero.

Stage 3: Switch SW2 closes, connecting the capacitive element C3 of the electroluminescent device 1 to the second supply rail Vn. The principles are the same as with Stage 1, except the capacitive element C3 of the electroluminescent device 1 is charged negatively. After some time, the capacitive element C3 of electroluminescent device 1 is charged to the same negative potential as the negative supply rail Vn and switch SW2 then opens.

Stage 4: Switch SW3 closes connecting the negatively charged capacitive load C3 in the electroluminescent device 1 to ground through the storage inductors L2 and L4. The principles are the same as with Stage 2 but current flows through storage inductors L2 and L4 in the opposite direction. At the end of step 4, switch SW3 opens.

The four-stage process described reduces the top-up time (or the time when the panel is connected to one of the two rails Vp and Vn, Stages 1 and 3). The higher the capacitance of the capacitive load C3, the more the top-up time is reduced (or the longer the regeneration time Stage 2 and Stage 4 takes).

In both Stages 2 and 4 it can be seen by reference to figure 2 that the charge in the capacitive element C3 is discharged but then recharges to the opposite polarity using the energy stored in the storage inductors L2 and L4. As a result of this phenomenon, the inverter drive 2 is said by the inventors of this invention as a regenerative inverter drive, reusing energy stored rather than drawing more energy from the rails Vp, Vn.

Figure 2 relates the voltage waveforms to the switches SW1 to SW4. At Stage 1, a DC voltage is applied to the controlling input of switch SW1 closing it, at Stage 2 the voltage applied to the controlling input of switch SW1 is discontinued and momentarily later, switch SW4 is closed, connecting the capacitive element C3 of electroluminescent display 1 to ground as described above. At Stage 3 switch SW4 is opened and momentarily later switch SW2 closed charging to capacitive element C3 of electroluminescent device 1 negatively. At Stage 4 the voltage applied to the controlling input of switch SW2 is discontinued and switch SW3 closed allowing flow of current in the opposite direction to that of Stage 2 through the storage inductors L2 and L4.

Figure 2 shows the impact of the circuit of the invention upon the measured charging voltage at the output of the inverter drive 2, labelled Vo in figure 1. At Stage 1 the voltage increases sinusoidally which is as a result of the impact of inductors L2 and L1 (if included) on the step increase in voltage applied from supply Vp. In reality there may be a small overshoot observed. Once the capacitive element C3 is fully charged, at Stage 2, switch SW1 is opened disconnecting supply Vp, and switch SW4 closed allowing discharge of the capacitive element C3 though inductors L2 and L4 to ground. When the current passing though the storage inductors L2 and L4 is close to zero (Stage 3) switch SW4 is opened and switch SW2 closed as the voltage at the output of the inverter drive 2, Vo transitions from positive to negative and the capacitive element C3 becomes increasingly negatively charged. As can be seen the combined effect of inductors L2 and L4, makes the discharge and recharging curve close to part of a sine curve, rather than a square wave and the energy stored in in the magnetic field of inductors L2 and L4 is resupplied to the electroluminescent device 1. At Stage 4, switch SW2 is opened and switch SW3 closed, the negative charge on the capacitive element C3 is now discharged to ground through storage inductors L2 and L4, and as the current through storage inductors L2 and L4 again become close to zero, switch SW3 is opened and SW1 closed and the cycle repeated, again with the voltage output Vo following part of a sine curve.

In Figure 3, a proposed alternative arrangement based around an H-Bridge instead of a Half-Bridge is presented. This is accomplished by the addition of SW5, RECT5, SW6 and RECT6. The controlling input to SW5 (V5) would typically be the same as the controlling input to SW1 (V1). The controlling input to SW6 (V6) would then typically be the same as the controlling input to SW2 (V2). The voltage supply patterns and principles of operation of this configuration would otherwise be very similar to that of the Half-Bridge topology presented in Figure 1. When the solid-state switch pair comprising of SW1 and SW5 are both closed, Vo is positive with respect to Vo2 and current flows to charge the EL Lamp. When the solid-state switch pair comprising of SW2 and SW6 are both closed, Vo is negative with respect to Vo2 and current flows in the opposite direction, charging the EL Lamp to the opposite polarity.

A benefit of the topology shown in Figure 3 is the ability to double the output voltage or achieve the same output voltage without the need for both positive and negative supply rails, significantly reducing overall component count. As a result, the cost and dimensions of the inverter drive can be reduced.

It should be noted that the current curve lo in figure 2 reaches a maximum positive or negative voltage after switch SW3 or SW4 is closed but then remains constant whilst the switch is closed. In reality the voltage declines slightly over time. This peak can be useful as described below to determining when the current in storage inductors L2 and L4 is close to zero.

The determination of correct timings for the switching waveforms in the inverter drive 2 is based on the time required for the regeneration stages (ie when switch SW3 or SW4 is closed) to complete. This time is dependent on various parameters such as the value of inductance chosen for the storage inductors L2 and L4, whether either inductors are omitted from the design, as well as the electroluminescent device capacitance, and various intended or parasitic resistances, capacitances and inductances within the inverter drive 2, electroluminescent device 1 and connections between the inverter drive 2 and the electroluminescent device 1. Any possible methods of determining the correct timings for the switching waveforms may be used with this invention.

Determination of correct timing waveforms for the inverter drive 2 may be by direct measurement of current through the storage inductors L2 and L4 as described above, or through the electroluminescent device 1, or at any other relevant location in either the inverter drive 2, or the connections (such as Vo in figure 1) between the inverter drive 2 and the electroluminescent device 1. Some examples of typical implementations, may include:
- A current measurement device, which comprises a shunt resistor and may comprise of a voltage amplifier. The voltage across the shunt resistor in series with the storage inductors L2 or L4 can be used to determine the current flowing through the resistor and hence the current through the storage inductor. Switch SW3 or SW4, as appropriate, would open when the current through the storage inductor (L2 or L4) falls close to zero.
- A current measurement device, working on the principle of magnetic field generated by the current flowing through either the rails Vp and Vn or through the storage inductors L2 or L4, by means of a Hall-Effect device or other magnetic field sensitive device(s), to determine the current through the storage inductor L2 or L4. As before, switch SW3 or SW4, as appropriate, would open when the current through the storage inductor L2 or L4 falls close to zero.

An indirect system for determining the time required for the current in the storage inductor to approach zero may be employed. A typical implementation may use the following principle devices:
- A device which may adjust waveform timings based on voltage or current waveforms, acoustic noise produced by the inverter drive 2 or the electroluminescent device 1. A device which monitors voltage waveforms, such as the voltage waveform on the voltage output Vo from the inverter drive 2 to the electroluminescent device 1, can, for example, be used to determine when the current through the storage inductor L2 or L4 falls close to zero. A positive or negative voltage peak in the measured voltage (as seen in figure 2 will occur) at that point in time.
- A device which determines the time required to discharge the capacitive load C3 to ground through switch SW3 or SW4, without directly measuring when the current through the storage inductor L2 or L4 falls close to zero. This device may directly or indirectly measure the electroluminescent device 1 capacitance or impedance, or simply use predetermined timings.

Having an inverter drive which can output any voltage and frequency combination as described is very desirable. This is because applications will have different brightness level and power consumption requirements. The ability to output at any frequency means that the inverter can be tuned to the most efficient voltage and or frequency. It is very possible that different phosphors used in electroluminescent devices may also have their individual optimum frequencies. When the load is not an electroluminescent device, similarly there will be an optimum voltage and frequency combination.

The regenerative bridge circuit 2 described appears to be at least 90% efficient using real components that fit in an inverter design having a power density of typically 2-10x existing inverters, whilst maintaining an overall inverter efficiency of 80-83%. The volume and weight savings brought about by this invention have significant benefits for battery-powered, aviation/aerospace and motorsport applications. Even higher efficiency would be possible using larger or more efficient components. There is a small fixed power overhead not included in the above calculations, due to the energy required to power the control circuitry, such as a microcontroller. Known inverter drives for electroluminescent drives typically have an efficiency of 50-80%, with a large form factor (low power density). This efficiency decreases significantly if the load is poorly matched to the drive or if the inverter over-driven.

Existing inverters using transformers (single transistor oscillator with transformer to step up the voltage at the operating frequency) react passively to changes in the load as the secondary windings of the transformer are the inductive element in an LC oscillator. Such a high number of turns is required on the secondary for two reasons.
- Firstly, to produce a large inductance which results in an oscillation frequency of typically 400Hz to 2 kHz. If the inductance was reduced the windings and electroluminescent device would above the desired frequency range.
- Secondly, to step up the low input voltage to a higher voltage required by the electroluminescent (or piezoelectric) device.

In order to have a highly efficient inverter using common topologies, the size of the transformer would be impractical.

Electroluminescent materials can be driven using a square wave, however fast rise and fall times result in high peak current, which, as mentioned previously, can cause excessive heating and audible noise, as well as increased EMI and potential damage to the inverter or load. A square wave has the benefit that the RMS voltage is the peak voltage, so a lower DC rail voltage is required, which is easier to produce. It is also beneficial to keep the peak voltage as low as possible to operate the electroluminescent or piezoelectric device efficiently and without damaging the dielectric due to over-voltage.

The benefits of oscillatory action are theoretical 100% efficiency when ideal components are used and no external energy required to change the polarity. The reason this invention can use a relatively small value inductors, is because rather than oscillating at the fundamental frequency (for example 400Hz to 2Khz as is the case for most commercially available EL inverters), as the output waveform is something close to a square wave, the resonant action is only present in the relatively fast rising and falling edges, as can be seen in figure 2 showing the current passing through inductors L2 and L4 (Output Current Vo), and reflected in the slight sinusoidal oscillations seen in the voltage patterns of Vo in figure 2. As in the majority of the time the electroluminescent device 1 is connected to the supply rails Vp or Vn, the flexibility to choose any arbitrary output fundamental frequency, is maintained, simply by adjusting the duration of these top-up stages (Stages 1 and 3).

Alternative arrangements of the inductors would be apparent to those skilled in the art. For example, it may be possible to combine inductors L2 and L4 in some designs (located in either the position of L2 or L4 shown in Figure 1). Inductors L1 and L3 are shown in Figure 1, however typically when there is sufficient inductance in L2, additional current limiting inductance is not required. If L2 is removed, L4 serves as the only regenerative storage inductor and L1 and L3 act to limit the inrush current to and from the supply rails. If this inrush current is not an issue, such as when voltage rails Vp and Vn are replaced with constant current sources, L1 and L3 may not be needed.

Alternative arrangements of the rectifiers would also be apparent to those skilled in the art. Depending on the exact solid-state switches used, RECT1 and RECT2 may not be needed. Similarly, it would be apparent that the positions of RECT1 and RECT2 could be moved to be closer to the supply rails Vp and Vn and that RECT3 and RECT4 would not be needed if SW3 and SW4 were able to block current in both direction when open (as typical solid-state switches like MOSFETs have intrinsic parasitic body diodes which always conduct in one direction). As with RECT1 and RECT2 which are common to both Figure 1 and Figure 3, RECT5 and RECT6 which are added in Figure 3 would similarly be optional and may be moved to the opposite sides of SW5 and SW6.

It is emphasised that the example in Figure 1 is illustrative of the invention's typical implementation but is in no way limiting upon the invention, as the arrangement of components (such as the use of separate inductors L2 and L4) is be chosen to suit the particular application envisaged.

One advantage of the invention described is that the frequency of the square waveforms supplied to switches SW1 and SW2 can be varied, varying the fundamental output frequency, causing a change of colour displayed by the electroluminescent device, due to multiple activation centres in the electroluminescent phosphor. One example of this colour change is visible with Aqua/light blue phosphor which can change from green, through aqua, to blue, by increasing frequency.

## Claims

1. A regenerative inverter drive (2) for electroluminescent devices orother capacitive loads (1) having a first supply rail (Vp) and a second supply rail (Vn) respectively, being maintained at different voltages with respect to each other and to ground, the ground voltage being between the voltage of the first and the second supply rails, wherein in that the drive (2) comprises first and second switches (SW1 and SW2) to connect to and alternately charge and discharge the capacitive load (1) and importantly the drive (2) additionally includes one or more energy storage devices (L2, L4) absorbing and storing energy from the capacitive load (1) until the capacitive load (1) has discharged to the ground voltage, when the energy can then be transferred back to the capacitive load by regenerative action recharging the capacitive load (1) with the reverse polarity.

2. A regenerative inverter drive (2) according to claim 1 **characterised in that** the energy storage devices are inductors (L2 and L4).

3. A regenerative inverter drive (2) according to claim 1 or 2 **characterised in that** an inductor (L2) is placed between the capacitive load (1) and the first and second supply rails (Vp and Vn).

4. A regenerative inverter drive (2) according to any one of claims 1 to 3 **characterised in that** the first and second switches (SW1 and SW2) are solid-state switches alternately supplied with a square waveform to close the first switch (SW1), while the second switch (SW2) is open and then subsequently to open the first switch (SW1) and close the second switch (SW2).

5. A regenerative inverter drive according to claim 4 in which the frequency of the square waveform can be varied.

6. A regenerative inverter drive (2) according to any preceding claim **characterised in that** that the regenerative inverter drive (2) additionally comprises switches (SW3 and SW4) and having energy storage devices (L2 and L4) between the third and fourth switches (SW3 and SW4) and the capacitive load (1), either of the third and fourth switches (SW3 and SW4), when closed, connecting the capacitive load (1) to ground, each of the third and fourth switch (SW3, SW4), current passing to ground from the capacitive load (1), when charged positively with respect to ground, when the fourth switch SW4 is closed, and current passing from ground to the capacitive load when the third switch SW3 and the capacitive load (1) negatively charged with respect to ground.

7. A regenerative inverter drive (2) according to claim 6 **characterised in that** the fourth switch (SW4) opens from being closed when the current in the storage inductors (L2 and L4) falls to near zero.

8. A regenerative inverter drive (2) according to claim 6 or 7 **characterised in that** the third switch (SW3) opens from being closed when the current in the storage inductors (L2 and L4) rises to near zero.

9. A regenerative inverter drive (2) according to any one of claims 6 to 8 characterised the first switch (SW1) closes after the fourth switch (SW4) opens and the second switch (SW2) closes after the third switch (SW3) opens.

10. A regenerative inverter drive (2) according to any preceding claim in which the ground voltage is the mean of the voltage applied to the first rail (Vp) and the second rail (Vn) with a bias of typically up to 5V positive or negative.

11. A regenerative inverter drive (2) according to any proceeding claim in which the drive (2) may instead be connected to a single voltage rail (Vp) and ground, with a mid-voltage rail used in place of ground in the circuit. A capacitor divider (2.1) may be used to split the voltage to produce this mid-voltage rail. As per claim 10, a small bias voltage can still be achieved using different value capacitors in the capacitor divider (2.1).

12. An electroluminescent device with a regenerative inverter drive (2) according to any preceding claim.
